# EUROPEAN PATENT APPLICATION

(11) **EP 1 167 967 A2**
(43) Date of publication of application: **02.01.2002**
(21) Application number: 01114713.9
(22) Date of filing: 21.06.2001
(51) Int. Cl.: G01N 31/10

(54) **Apparatus for evaluating activity of catalysts**

(30) Priority: 23.06.2000 JP 2000188728
(71) Applicant: Tohoku University, Sendai City, Miyagi Prefecture (JP)
(72) Inventor: Yamada, Muneyoshi, Sendai City, Miyagi Pref. (JP); Omata, Kohji, Sendai City, Miyagi Pref. (JP)
(74) Representative: von Hellfeld, Axel, Dr. Dipl.-Phys.

(57) **Abstract**

An apparatus for evaluating activity of catalysts, includes a reactive gas-introducing unit, a reacting vessel inlet gas controller for controlling a flow rate of a reactive gas to be fed via the reactive gas-introducing unit, a reacting vessel into which the reactive gas is through the reactive gas-introducing unit, a catalytic reaction gas outlet unit for discharging the catalytic reaction gas from the reacting vessel, a reacting vessel outlet gas controller for controlling a flow rate of a catalytic reaction product discharged from the reacting vessel to the reacted gas outlet unit, and a catalytic reaction product detector for identifying the catalytic reaction product, said reacting vessel comprising a pressure-proof stainless vessel body of which pressure is adjustable and in which a number of catalyst samples are to be placed, and a heater for uniformly heating the catalyst samples, the reactive gas undergoing the catalytic reaction during passing through each catalyst sample, the catalytic reaction gas outlet unit comprising lines for discharging catalytic reaction gases from the catalyst samples, respectively, the reacting vessel outlet gas controller comprising a gas flow rate controller and a switching, said gas flow rate controller being adapted for keeping constant a gas flow rate of the reaction product gas discharged through each catalyst sample through the corresponding line, and the switching section for communicating the corresponding line among a number of the lines with the catalytic reaction product detector.

## Description

### Background of the Invention

### (1) Field of the Invention

The present invention relates to a catalyst activity-evaluating apparatus, which enables the effective measurement of the reaction activity of plural catalysts.

### (2) Related Art Statement

Catalysts are used in various chemical processes, and are optimized by various methods, because whether the processes are good or not depends upon the catalysts. At that time, it took a long time for the optimization, because conventional catalyst-evaluating apparatuses could only evaluate catalysts one by one.

In order to solve such a problem, various trials have been made to simultaneously evaluate a number of catalysts as seen in B. Jandelei Angew. Chem. Int. Ed., Vol. 38, pp 2494-2532, 1999. According to such an apparatuses, a number of the catalysts can be evaluated, but there is a problem that a condition such as temperature, pressure and gas flow rate in measuring the activity of catalysts largely differs from that under which the catalysts are actually used. Consequently, even catalysts which are judged as "optimum" are merely candidates for the really optimum catalysts, and thus the catalysts must be tested again under the actual reaction condition.

### Summary of the Invention

It is an object of the present invention to provide an apparatus for evaluating the activity of catalysts, which enables simultaneous evaluation and effective measurement of the reaction activity of the catalysts under the same condition (temperature, pressure, gas flow rate, etc.) as employed in an actual process. Workability in looking for optimum catalysts and optimization of catalysts can be improved by the simultaneous evaluation of plural catalysts.

The apparatus for evaluating activity of catalysts according to the present invention, comprises a reactive gas-introducing unit, a reacting vessel inlet gas controller for controlling a flow rate of a reactive gas to be fed via the reactive gas-introducing unit, a reacting vessel into which the reactive gas is through the reactive gas-introducing unit, a catalytic reaction gas outlet unit for discharging the catalytic reaction gas from the reacting vessel, a reacting vessel outlet gas controller for controlling a flow rate of a catalytic reaction product discharged from the reacting vessel to the reacted gas outlet unit, and a catalytic reaction product detector for identifying the catalytic reaction product, said reacting vessel comprising a pressure-proof stainless vessel body of which pressure is adjustable and in which a number of catalyst samples are to be placed, and a heater for uniformly heating the catalyst samples, the reactive gas undergoing the catalytic reaction during passing through each catalyst sample, the catalytic reaction gas outlet unit comprising lines for discharging catalytic reaction gases from the catalyst samples, respectively, the reacting vessel outlet gas controller comprising a gas flow rate controller and a switching, said gas flow rate controller being adapted for keeping constant a gas flow rate of the reaction product gas discharged through each catalyst sample through the corresponding line, and the switching section for communicating the corresponding line among a number of the lines with the catalytic reaction product detector.

According to the present invention, since a number of the catalyst samples are placed in the single reacting vessel, such numerous catalysts can be maintained in almost the same reaction condition. Further, since the temperature, pressure and the gas flow rate in the reacting vessel can be independently controlled, they can be set according to those in the practical use condition. Further, the flow rate of the reaction product gas discharged through the line from each catalyst sample can be controlled constant by the gas flow rate controller in the catalytically reacted outlet gas controller, and the numerous lines can be communicated with the product detector successively one by one by means of the switching section. Therefore, the reaction product in the catalytic reaction gases from the numerous catalysts under the same catalytically reacting condition can be successively detected with high precision.

When plural kinds of gases are used in the catalytic reaction, the reactive gas-introducing unit comprises plural reactive gas-introducing units, and the reacting vessel inlet gas controller controls each of the plural reactive gas-introducing units independently or in connection with one another. Such reactive gas-introducing units and such a reacting vessel inlet gas controller as formerly used can be used.

As the reacting vessel, a conventional autoclave type reacting vessel which can be heated and pressurized may be used. Each catalyst may be placed in a cell, which is put into the reacting vessel. Further, the catalyst (and cell) can be heated with a heater through a soaking metallic block having a high heat conductivity, such as aluminum. In this case, the catalysts (or catalyst-placed cells) can be placed on, in or near the soaking block. In the present invention, the term "a number of" or "numerous" catalysts means the number of catalysts which are necessary and sufficient for effecting the optimization evaluation.

As the flow rate controller for the catalytic reaction product gas, a capillary may be used to control the gas flow rate constant. Further, a valve array switching mechanism may be used as the switching section.

These and other objects, features and advantages of the invention will be explained in more detail when taken in connection with the attached drawings with the understanding that some modifications, variations and changes could be made by the skilled person in the art to which the invention pertains.

### Brief Description of the Drawings

For a better understanding of the invention, reference is made to the attached drawings, wherein:
Fig. 1 is a view schematically illustrating one embodiment of the catalyst activity-evaluating apparatus according to the present invention;
Fig. 2 is a diagram schematically showing W/F values of catalyst layers in Example 1;
Fig. 3 is a diagram schematically showing test results in standard catalyst tests in Example 1;
Fig. 4 is a graph showing effects of copper-manganese composite oxide upon the catalyst activity in Example 1; and
Fig. 5 is a graph showing effects of copper-zinc-aluminum composite oxide upon the catalyst activity in Example 1.

### Detailed Description of the Invention

In the following, one embodiment of the catalyst activity-evaluating apparatus according to the present invention will be explained in more detail with reference to the drawings.

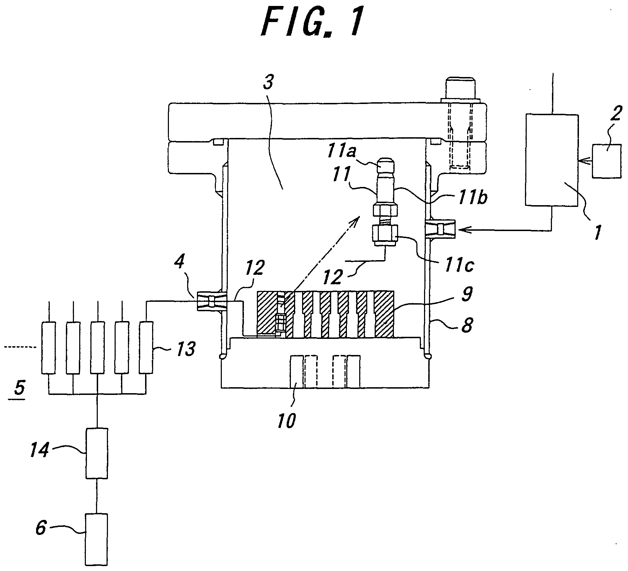

In Fig. 1, the present embodiment of the catalyst activity-evaluating apparatus comprises a reactive gas-introducing unit 1, a reacting vessel inlet gas controller 2 for controlling the flow rate of a reactive gas to be fed via the reactive gas-introducing unit 1, a reacting vessel 3 into which the reactive gas is fed through the reactive gas-introducing unit 1, a catalytic reaction gas outlet unit for discharging the catalytic reaction gas from the reacting vessel 3, a reacting vessel outlet gas controller 5 for controlling the flow rate of a catalytic reaction gas to be discharged from the reacting vessel 3 to the catalytic reaction gas outlet unit 4, and a catalytic reaction product detector 6 for identifying the catalytic reaction product. The reacting vessel comprises a pressure-proof stainless vessel body 8 of which pressure is adjustable and in which a number of catalyst samples are to be placed, a soaking block 9 for heating the catalyst samples placed in the vessel body 8 at a uniform temperature, and plural cartridge type heaters 10. A number of catalyst samples (not shown) are charged into cells 11, respectively, which are tightly arranged in through-holes formed in the soaking block 9. The catalytic reaction gas outlet unit 4 comprises lines 12 for discharging the catalytic reaction gas form the respective catalyst samples in the reacting vessel. In this embodiment, one end of the line 12 is connected to a lower end of the corresponding cell 11, and the other connected to the reacting vessel outlet gas controller 5. The reacting vessel outlet gas controller 5 comprises capillaries 13 as gas flow controllers for keeping the flow rate of the reaction product gas constant and a valve-array switching mechanism 14 for communicating any one of numerous lines from the capillaries with the product detector 6.

The reactive gas is led to the autoclave type reacting vessel through the reactive gas-introducing unit, and then undergoes the catalytic reaction during passing through each catalyst sample, and the catalytic reaction gas is discharged through the line. After the reaction gas is discharged from the catalyst sample through the line, the reacting vessel outlet gas controller communicates one of numerous lines with the catalytically reacted product detector 16 through the switching mechanism 14. A conventional detector is used as the catalytically reacted product detector.

### (Examples)

### (Example 1)

In the following, test examples will be explained with respect to measurement of the catalytic activity of copper-manganese composite oxides having various Cu-Mn ratios at 523 K and 1 MPa.

### (1) Reacting vessel and catalytically reacting condition

The reaction was effected with a fixed bed flow type reactor. A low-pressure type autoclave (manufactured by Toei Kagaku Sangyo Co., Ltd.) reacting vessel having an inner diameter of 150 mm and an inner volume of 2.8 liters as shown in Fig. 1 was used as a reacting vessel.

As catalyst cells, twelve high-pressure tube fitting (manufactured by Swagelok Co. SS-100-R-4, 1/16 inch type Swedge Look Tube fitting - 1/4 pipe) were used as they are. As shown in Fig. 1, each high-pressure tube fitting was constituted by an upper pipe 11a having an outer diameter of 1/4 inches and a lower Swagelock fitting to which a pipe 11b having an outer diameter of 1/16 inches is connected. The catalyst was charged into the 1/4-inch pipe. The high-pressure tube fitting was inserted into an aluminum block (77 mm long, 116 mm wide and 41 mm high) in the state that the 1/4-inch pipe was positioned upwardly with its end opened. This block was placed on the bottom of the autoclave. Heating was effected with 6 cartridge type heaters from the outside of the bottom of the autoclave. The temperature difference was suppressed to not more than 2 K among the catalyst cells by using the above combined construction.

In the above, about 80 mg catalyst was charged into the 1/4-inch pipe of each of the high-pressure tube fittings. The reactive gas was fed simultaneously into twelve catalyst beds in the 1/4-inch pipes, respectively, and the reacted gas was separately led from the catalyst layer to the outside of the reacting vessel via each of the 1/16-inch pipes through the catalytic reaction gas outlet unit at a side of the autoclave. Each of the lines was connected to a three-way valve (not shown) outside the autoclave, and such three-way valves were operated to flow the gas through only one of the twelve lines via the SUS capillary of an inner diameter of 0.1 mm and a length of 10 m to the gas analyzer or the reaction product detector after the pressure was reduced with the flow rate being adjusted. The remaining eleven lines 11 were led to a back pressure valve (not shown) to reduce the pressure of the gas. By this, the spatial speed of the reacted gas through the catalyst layers was made uniform at the time of analysis, and the pressure of the catalyst layers was kept constant. A gas mixture having a composition of H₂/CO/CO₂/N₂ = 60/30/5/5 was used as a reactive gas. The reaction was effected at : 1MPa, and the ratio of W/F (W : weight (g) of the catalyst, F : the feed rate (mol/h) of the gas) of the reactive gas through each catalyst was about 4 g-h/mol (20 mol/Cu-Mn-mol/h). The analysis was effected with a GC (Activated carbon column GC-3BT, TCD, manufactured by Shimazu Manufacturing Co., Ltd). The conversion rate was determined based on changes in ratio between CO and CO₂ with respect to nitrogen. The main product was methanol with a slight amount of methane.

### (2) Catalyst

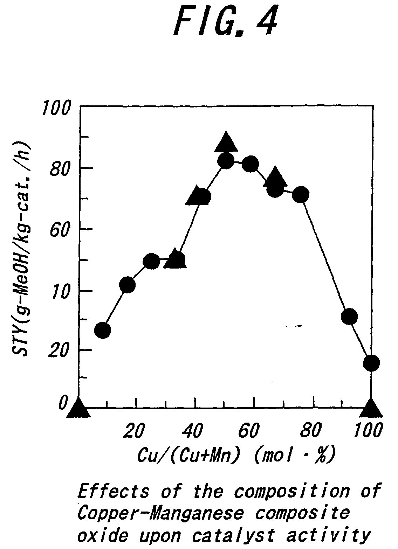

The catalysts were prepared by an oxalic acid-ethanol method. That is, a 0.18 mol/l ethanol solution of copper nitrate (II) and an ethanol solution of manganese nitrate (II) (concentration: 0.18 mol/l) were mixed in each of twelve test tubes (outer diameter of 12 mm) in a mixed total volume of 6 ml, while the ratio between them was changed (See Fig. 4). While stirring, 2 ml of a 1.1 mol/l ethanol solution of oxalic acid was added into the mixture, thereby co-precipitating oxalates of copper and manganese. After that, the precipitate was centrifugally separated, the ethanol solvent was evaporated, and the resultant was dried at 393 K, and fired at 623 K, thereby obtaining an oxide product. The product was heated up to and reduced at 523 K in the reactive gas. The resulting product was used for the catalytic reaction. As a reference, a Cu-Zn catalyst (MDC-3, manufactured by Toyo CCI Co., Ltd.)

### (3) Experiment

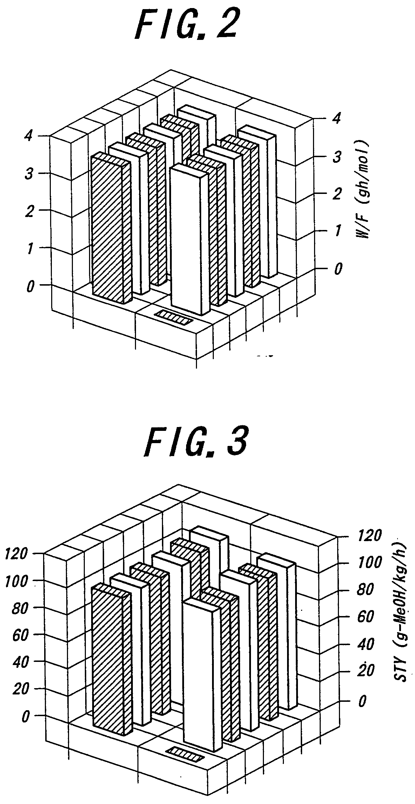

Fig. 2 shows the W/F ratios with respect to the MDC-3 filled catalyst layers, respectively. In Fig. 2, a blank portion (shown as "zero") shows a monitored result with respect to a non-reactive gas composition. Since the resistance of the capillary was large, the flow rate was constant because it was determined by a pressure difference (9MPa) between the interior of the reacting vessel and the open air. The flow rate was constant, even when a catalyst powder having a different density was used. This results show that each of W/Fs and STYs (STY: Space time yield) were almost constant with respect to all the catalyst layers.

Fig. 3 shows the activity with respect to the MDC-3 filled in eleven catalyst cells. In Fig. 3, a blank portion (shown as "zero") shows a monitored result with respect to a non-reactive gas composition. The reaction temperature was 523 K. Differences in STYs (STY: Space time yield) fall in a range of around ±0.1 % as the conversion rate, which shows that no difference in temperature and W/F actually occurs depending upon the installation places of the catalyst cells. The results show that since the same catalysts gave almost the same STY, there was almost no difference in temperature and flow rate depending upon locations.

Next, catalysts with various Cu/Mn ratios were charged into eleven catalyst cells, and their activities were measured at 523 K. After pretreatment of increasing the temperature to 523K in the reactive gas, the pressure was raised to 1 MPa, and activities of given catalyst only was first measured. Two hours later when the activity became constant, the catalysts to be measured were changed successively for the measurement of the activities. At last, the activities of the first catalyst were measured again, which showed almost the same results. Therefore, it is considered that no deterioration occurred in activity during this measurement. The reacting time was about 10 hours. Fig. 4 shows results (black circle ●) with respect to the content of Cu.

Results are also shown in Fig. 4 with respect to results (black triangle ▲) obtained by an conventional fixed bed flow type reactor. The activity was maximum when Cu/Mn = 1 : 1. The catalysts having the same composition showed the same activity between ● and ▲. This shows that data quality does not differ in results between the preparations of the catalysts in the test tubes and the activity tests by the present reacting vessel vs. the conventional catalyst preparations and activity tests, and that the latter can be replaced by the former. Further, it is seen that the activity tends to be higher in a Cu-rich area and in a Mn-rich area. This is a phenomenon that can be first grasped by examining the catalysts having the Cu/Mn ratio finely varied. This shows that the phenomenon overlooked in the conventional methods due to the longer time period required can be found out by the catalyst activity-evaluating apparatus according to the present invention.

In the above, it is demonstrated that the catalyst activity-evaluating apparatus according to the present invention can evaluate the activity of a number of catalysts at one time. According to the above Examples, one-day evaluation was necessary in the catalyst activity-evaluating apparatus of the present invention for obtaining the results in Fig. 4, whereas when the conventional fixed bed flow type reactor was used, a time period required for evaluating catalyst samples including a catalyst-pretreatment time and a time for stabilizing the analyzer is about 10 hours per one line and one sample, and about 2 weeks are ordinarily required for obtaining the results in Fig. 4. Further, the catalyst activity-evaluating apparatus according the present invention can be handled in the same activity test condition as that in the case of using the conventional fixed bed flow type reactor, and exhibits good data reproductivity and improved screening efficiency of the catalysts. When the number of the catalyst containers is increased and the analysis time per catalyst container is shortened, the efficiency can be further enhanced.

### Example 2

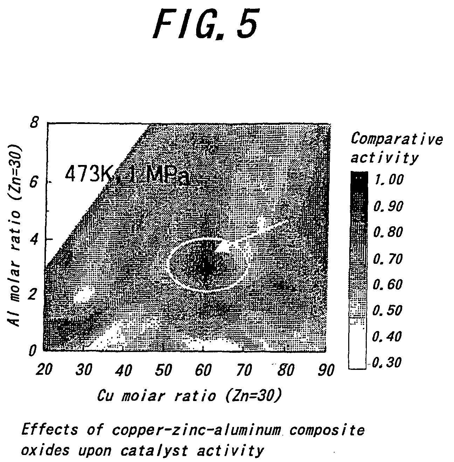

Fig. 5 shows results obtained by measurement of the activity of catalysts composed of three oxides of copper, zinc and aluminum under the condition of 473 K and 1 MPa. Example 2 was carried out in the same manner as in Example 1. Almost the same catalysts as in Example 1 were used. That is, the following catalysts were used.

The catalysts were prepared by the oxalic acid-ethanol method. That is, a 1 mol/l ethanol solution of copper nitrate (II) and an ethanol solution of zinc nitrate (II) (concentration: 1 mol/l) were mixed in each of twelve test tubes (outer diameter of 12 mm) in a mixed total volume of 1.1 ml, while the ratio between them was changed (See Fig. 5). While stirring, 0.7 ml of a 1.8 mol/l ethanol solution of oxalic acid was added into the mixture, thereby co-precipitating oxalates of copper and zinc. Then, 0.013∼0.054 ml of a 1 mol/l ethanol solution of aluminum nitrate (III) was added to the reaction mixture. Then, the precipitate was centrifugally separated, the ethanol solvent was evaporated, and the resultant was dried at 393 K, and fired at 623 K, thereby obtaining an oxide product. The product was heated up to and reduced at 523 K in the reactive gas. The resulting product was used for the catalytic reaction.

The evaluation of the catalysts having the widely changed compositions, which ordinarily required not less than 10 days, was completed in one day. This enabled active compositions in an area shown by ○ in Fig. 5, which was overlooked by the conventional method. It has been formerly considered that high activity would be obtained in an area where the molar rate of aluminum was a little greater (A1 : about 10 mol to Zn = 30 mol, this area being not found in Fig. 5). The light and shade of the color is representative of the magnitude of the conversion rate. The darker the color, the higher is the conversion rate. See a right index in Fig. 5. The reason why the results in Fig. 5 were obtained are not accurately clarified. Probably, the results are considered that the catalyst exhibited its function to kept wide the surface area of copper during the reaction.

According to the catalyst activity-evaluating apparatus, the efficiency for the evaluation of the catalyst activity can be largely improved. Owing to this, the time period required for developing catalysts can be shortened, and new catalysts can be developed.

Further, when the conventional apparatus is to be modified to obtain the catalyst activity-evaluating apparatus according to the present invention, all the components of the conventional apparatus need not necessarily be replaced with new ones. The reacting vessel inlet gas controller and the reaction product detector conventionally employed can be used as they are, which enables the efficiency for developing the catalysts to be largely enhanced by replacing a part of the conventional apparatus.

According to the present invention, since a number of the catalysts are placed in one reacting vessel, the numerous catalysts can be kept under almost the same reacting condition. Further, since the temperature, the pressure and the gas flow rate in the reacting vessel can be independently controlled, they can be set at the practical use condition for the catalysts. Further, the gas flow rate of the reaction product gas discharged from each of the catalyst samples through the lines can be kept constant by the gas flow rate controller of the catalytic reaction outlet gas controller and only any one of the numerous lines can be successively communicated with the product detector by the switching unit. Therefore, the reaction product in each of the catalyst reaction gases from the numerous catalysts under the same catalytically reacting condition can be successively detected with high accuracy.

## Claims

1. An apparatus for evaluating activity of catalysts, comprising a reactive gas-introducing unit, a reacting vessel inlet gas controller for controlling a flow rate of a reactive gas to be fed via the reactive gas-introducing unit, a reacting vessel into which the reactive gas is through the reactive gas-introducing unit, a catalytic reaction gas outlet unit for discharging the catalytic reaction gas from the reacting vessel, a reacting vessel outlet gas controller for controlling a flow rate of a catalytic reaction product discharged from the reacting vessel to the reacted gas outlet unit, and a catalytic reaction product detector for identifying the catalytic reaction product, said reacting vessel comprising a pressure-proof stainless vessel body of which pressure is adjustable and in which a number of catalyst samples are to be placed, and a heater for uniformly heating the catalyst samples, the reactive gas undergoing the catalytic reaction during passing through each catalyst sample, the catalytic reaction gas outlet unit comprising lines for discharging catalytic reaction gases from the catalyst samples, respectively, the reacting vessel outlet gas controller comprising a gas flow rate controller and a switching, said gas flow rate controller being adapted for keeping constant a gas flow rate of the reaction product gas discharged through each catalyst sample through the corresponding line, and the switching section for communicating the corresponding line among a number of the lines with the catalytically reacted product detector.

2. The apparatus set forth in claim 1, wherein the gas flow rate controller comprises capillary tubes to be connected to the catalyst reaction product detector at one end through the switching section and to the lines of the catalytic reaction gas outlet unit.

3. The apparatus set forth in claim 1, which further comprises a soaking block placed in the reacting vessel and adapted for receiving the catalyst samples therein and heating the samples.

4. The apparatus set forth in claim 1, which further comprises tube fitting into which the catalyst samples are charged and which are to be inserted into the soaking block.
